**Europäisches Patentamt**

**European Patent Office**

**Office européen des brevets**

(11) Veröffentlichungsnummer: **0 278 054 B1**

## EUROPÄISCHE PATENTSCHRIFT

(45) Veröffentlichungstag der Patentschrift: **20.03.91**

(51) Int. Cl.5: **F16F 13/00, B60K 5/00**

(21) Anmeldenummer: **87115271.6**

(22) Anmeldetag: **19.10.87**

(54) **Hydraulisch dämpfendes Gummilager.**

(30) Priorität: **07.02.87 DE 3703820**

(43) Veröffentlichungstag der Anmeldung:
**17.08.88 Patentblatt 88/33**

(45) Bekanntmachung des Hinweises auf die
Patenterteilung:
**20.03.91 Patentblatt 91/12**

(84) Benannte Vertragsstaaten:
**BE FR GB IT NL SE**

(56) Entgegenhaltungen:
EP-A- 0 132 404      EP-A- 0 137 477
DE-A- 3 506 047      DE-C- 3 019 337
DE-C- 3 246 587      FR-A- 2 599 452

(73) Patentinhaber: **Boge A.G.**
**Bogestrasse 50**
**W-5208 Eitorf/Sieg(DE)**

(72) Erfinder: **Schyboll, Georg, Dipl.-Ing.**
**Westumer Strasse 69**
**W-5485 Sinzig-Westum(DE)**
Erfinder: **Brenner, Heinz**
**Am Thurmberg 11**
**W-5483 Bad Neuenahr-Ahrweiler(DE)**

## Beschreibung

Die Erfindung bezieht sich auf ein hydraulisch dämpfendes Gummilager, insbesondere Motorlager für Kraftfahrzeuge, mit zwei in Axialrichtung einander gegenüberliegenden starren Stirnwänden und wenigstens zwei axial hintereinander angeordneten, Dämpfungsflüssigkeit enthaltenden Kammern, wobei die Kammern miteinander durch einen in einer im wesentlichen radialen Ebene ringförmig verlaufenden, in einem starren Bauteil aufgenommenen Durchtrittskanal verbunden sind und die Eintritts-und Austrittsöffnung in jeweils eine Kammer mündet, wobei im starren Banteil mindestens ein den Durchtrittskanal in einzelne Kanalabschnitte teilendes Trennelement angeordnet ist, wobei über mindestens eine Öffnung im jeweiligen Trennelement eine Verbindung der einzelnen Kanalabschnitte miteinander vorgesehen ist. Solch ein Gummilager ist z.B. aus der EP-A- 132 404 bekannt.

Derartige Gummilager dienen der Lagerung von Antriebsaggregaten in Fahrzeugen aller Art. Bei der Lagerung von Verbrennungsmotoren in Kraftfahrzeugen ist einerseits zur Vermeidung der Geräuschübertragung eine möglichst weiche Lagerung mit geringer Eigendämpfung erforderlich, die jedoch die von der Fahrbahn angeregten Motorbewegungen sehr groß werden und fast ungedämpft ausschwingen läßt. Andererseits können die großen Motorbewegungen durch harte Lagerungen bzw. separate Stukerdämpfer verringert werden, was jedoch wieder zu erheblichen Geräuschübertragungen auf die Karosserie führt.

Es sind Gummilager (z.B. auch EA 132 404) bekannt, bei denen ein spiralförmiger Dämpfungskanal vorgesehen ist. Die Ein- und Austrittsöffnung ist jeweils zentrisch angeordnet, so daß erst durch Einlegen einer Scheibe mit einer entsprechenden Verbindungsöffnung die Strömungsrichtung festgelegt wird. Ohne die Trennscheibe ist der Dämpfungskanal unwirksam, da die Dämpfungsflüssigkeit axial durch das starre Bauteil fließen könnte.

Des weiteren sind Gummilager dieser Art bekannt (z.B. DE-C- 30 19 337), bei denen die erzielte Dämpfungswirkung und die erzielte Isolierwirkung unabhängig voneinander optimiert werden können, wobei sowohl eine gute Dämpfungseigenschaft als auch eine gute Isolierwirkung vorhanden ist. Im Prinzip wird dabei ein im Abstand um die Lagerachse verlaufender Kanal vorgesehen. Das Prinzip dieses Kanals beruht darauf, daß die Dämpfungswirkung nicht auf Drosselung im herkömmlichen Sinne mit Umwandlung der auftretenden Stoßenergie in Wärmeenergie beruht, sondern auf der Trägheit der im ringförmigen Durchtrittskanal verschobenen Flüssigkeitsmenge. Der ringförmige Durchtrittskanal ist dabei in einem starren Bauteil aufgenommen und die Länge des Kanals durch die geometrischen Gegebenheiten vorbestimmt. Nachteilig ist, daß eine Veränderung der Kanal-länge nur durch konstruktive Änderung des starren Bauteiles erfolgen kann.

Darüber hinaus sind Motorlager bekannt (z.B. DE-PS 32 46 587), bei denen der ringförmige Drosselkanal in einem starren Bauteil aufgenommen ist, welches als Ganzes elastisch aufgehängt ist und so die Kammern unterteilt. Der Durchtrittskanal dieses Motorlagers besitzt ebenfalls eine fest vorgegebene Länge.

Aufgabe der Erfindung ist es, ein den ringförmigen Durchtrittskanal aufnehmendes Bauteil eines Motorlagers so zu gestalten, daß durch einfache Bauteile eine variable, veränderbare Länge des Durchtrittskanales einstellbar ist.

Zur Lösung dieser Aufgabe ist erfindungsgemäß vorgesehen, daß das Trennelement aus mindestens einem zylindrischen Ring besteht.

Vorteilhaft ist, daß auf besonders einfache Weise die Länge des Durchtrittskanales unter Beibehaltung eines Standardbauteiles entscheidend verlängert werden kann. Durch die Länge des Durchtrittskanales wird u.a. auch die Lage des Dämpfungsmaximums bestimmt, so daß durch die Verlängerung des Durchtrittskanales auch im unteren Frequenzbereich akzeptable Dämpfungsmaxima realisiert werden können. Dabei kann der Kanal im Abstand um die Lagerachse oder spiralförmig aus einem oder mehreren Kanalabschnitten bestehend im starren Bauteil verlaufend angeordnet sein.

Gemäß einer vorteilhaften Ausführung der Erfindung sind mindestens zwei Ringe koaxial nebeneinander angeordnet, oder es sind mindestens zwei Ringe derart mit zwei Scheiben verbunden, daß die Länge des Durchtrittskanales verdreifacht wird.

Darüber hinaus ist nach einem wesentlichen Merkmal vorgesehen, daß das Trennelement aus mindestens einer Scheibe und mindestens einem Ring zusammengesetzt ist. Bei einer derartigen Gestaltung des Trennelementes lassen sich mindestens vier Kanalabschnitte erzeugen, die über Öffnungen hintereinander geschaltet werden können und so die Länge des Durchtrittskanales erheblich vergrößern.

Zur Erhöhung einer weiteren Variabilität in der Länge des Durchtrittskanales ist das Trennelement in einer Nut des starren Bauteiles drehbar gehalten. Vorteilhaft ist hierbei, daß durch Verdrehen der Scheibe oder des Ringes die Länge des Durchtrittskanales im problematischen Bereich verändert werden kann. Je nach Lage der Öffnung zu der Eintritts- und Austrittöffnung des Durchtrittskanales entsteht eine entsprechende Gesamtlänge des Durchtrittskanales.

EP 0 278 054 B1

Bevorzugte Ausführungsbeispiele der Erfindung sind in den Zeichnungen näher erläutert.

Es zeigt:

Figur 1 einen axialen Längsschnitt eines Motorlagers

Figur 2 bis 7 verschiedene Varianten von starren Elementen.

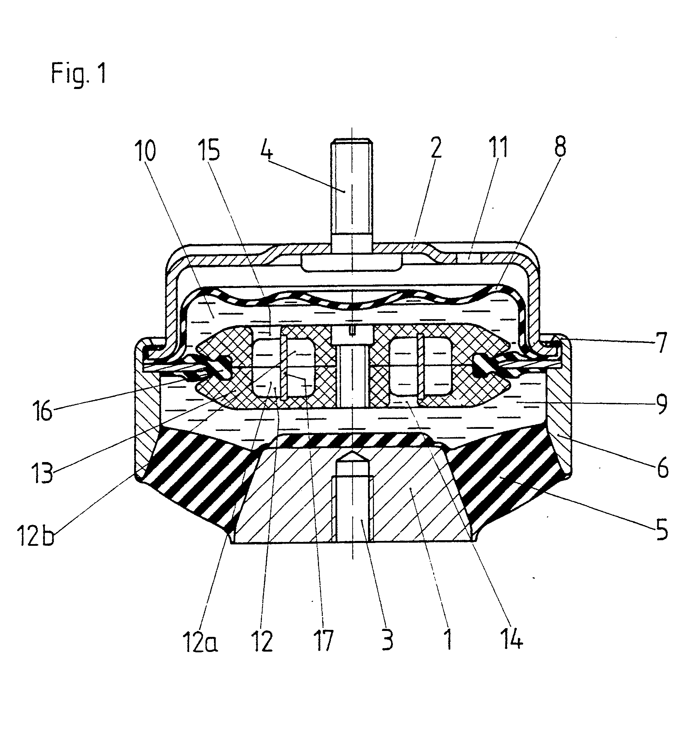

Das Motorlager nach Figur 1 besitzt zwei in axialer Richtung einander gegenüberliegende Stirnwände 1 und 2. Die Stirnwand 1 ist zu ihrer Befestigung entweder mit einer Gewindebohrung 3 oder mit einem nicht gezeichneten Gewindestift versehen. Entsprechend trägt die als Deckplatte ausgebildete Stirnwand 2 einen Befestigungsstift 4.

An die kegelig ausgebildete Mantelfläche der Stirnwand 1 ist eine als gummielastisches Federelement 5 ausgebildete Umfangswand anvulkanisiert, die in ihrer der Stirnwand 1 abgewandten Anschlußfläche mit einem Verbindungsflansch 6 vereinigt ist. Der Verbindungsflansch 6 umfaßt ferner eine Bördelung 7, die eine Membran 16, einen Faltenbalg 8 und die als Deckplatte ausgebildete Stirnwand 2 aufnimmt.

Das Motorlager besitzt somit zwei durch die Membran 16 und das starre Bauteil 13 voneinander getrennte, Dämpfungsflüssigkeit enthaltende Kammern 9 und 10, in denen die Kammer 9 als Druckkammer und die Kammer 10 als drucklos volumenaufnehmender Ausgleichsraum ausgebildet ist. Der Vollständigkeit halber sei noch erwähnt, daß in der Stirnwand 2 eine Entlüftungsöffnung 11 vorgesehen ist.

Das starre Bauteil 13 enthält einen in einer radialen Ebene ringförmig um die zentrale Lagerachse verlaufenden Durchtrittskanal 12, welcher die beiden Kammern 9 und 10 miteinander verbindet. Der ringförmige Durchtrittskanal 12 weist eine derartige Länge und eine Querschnittsfläche auf, daß die Resonanzfrequenz der während des dämpfenden Lagerbetriebes im ringförmigen Durchtrittskanal 12 verschobenen Flüssigkeitsmasse im Zusammenwirken mit den Elastizitäten des gummielastischen Federelementes 5 und der flexiblen Membran 16 im wesentlichen der Resonanzfrequenz des Fahrzeugmotors auf dessen Aufhängung entspricht.

Die an ihrem äußeren Umfang fest eingespannte Membran 16 ist mit dem starren Bauteil 13 verbunden. Der im starren Bauteil 13 aufgenommene ringförmige Durchtrittskanal 12 besitzt Ein- bzw. Austrittsöffnungen 14 und 15, die in je eine Stirnfläche eines starren Bauteiles 13 münden.

Es sind allerdings auch Konstruktionen möglich, bei denen das starre Bauteil 13 außen angeordnet ist und in seinem Zentrum eine elastische Membran vorgesehen wird.

Im ringförmigen Durchtrittskanal 12 ist das Trennelement 17 angeordnet, so daß der Durchtrittskanal 12 in zwei einzelne Kanalabschnitte 12a und 12b aufgeteilt wird.

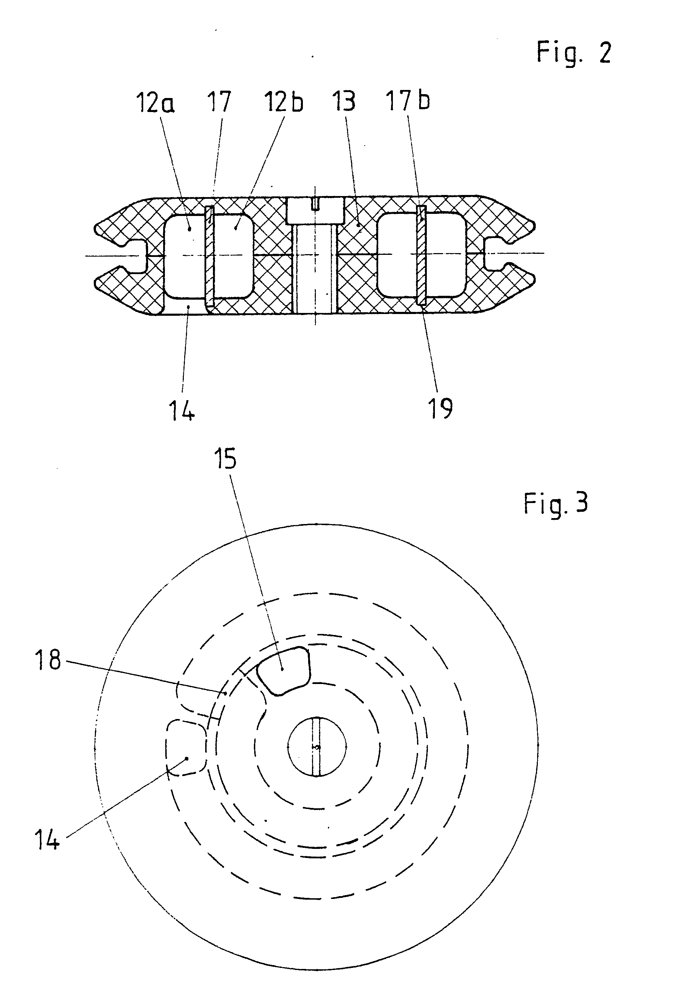

In den Figuren 2 und 3 ist ein starres Bauteil 13 gezeigt, welches im Prinzip dem in Figur 1 gezeigten entspricht. Als Trennelement 17 ist ein Ring 17b vorgesehen, welcher eine Öffnung 18 aufweist und so den Durchtrittskanal 12 wiederum in die Kanalabschnitte 12a und 12b unterteilt. Auch dieser Ring 17b läßt sich in einer Nut 19 anordnen und so über den Umfang drehbar lagern, damit eine entsprechende Abstimmung der Länge des Durchtrittskanales 12 ermöglicht wird. Die Figur 3 zeigt in Draufsicht die Eintritts- bzw. Austrittsöffnungen 14 und 15 sowie die Öffnung 18 im Ring 17b.

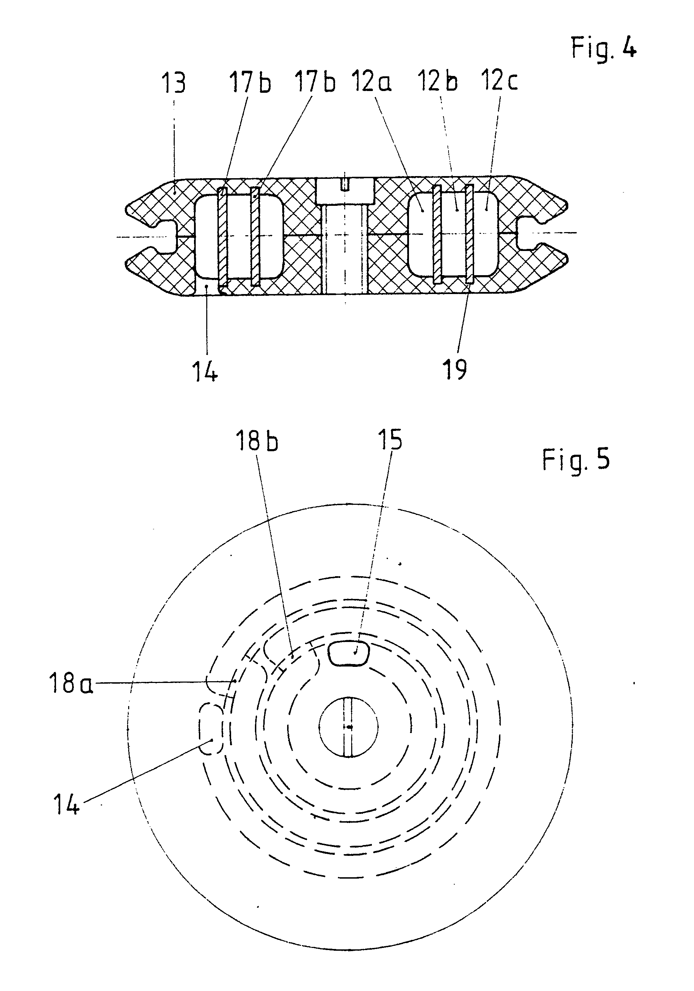

In den Figuren 4 und 5 sind zwei im Durchmesser unterschiedliche Ringe 17b im starren Bauteil 13 aufgenommen, so daß eine weitere Veränderung der Länge des Durchtrittskanales 12 möglich ist. Wie aus Figur 5 zu erkennen ist, teilt sich der Durchtrittskanal 12 in die einzelnen Kanalabschnitte 12a, 12b und 12c auf, wobei die Verbindung über die Öffnungen 18a und 18b erfolgen. Die Ringe 17b können dabei ohne weiteres als einteiliges Bauelement ausgebildet werden und auch als einteiliges Bauelement in einer Nut 19 verdrehbar gelagert werden. Durch die Verstellmöglichkeit der einzelnen Ringe 17b in der Nut 19 kann wiederum eine exakte Feinabstimmung der notwendigen Länge des Durchtrittskanales 12 erzielt werden.

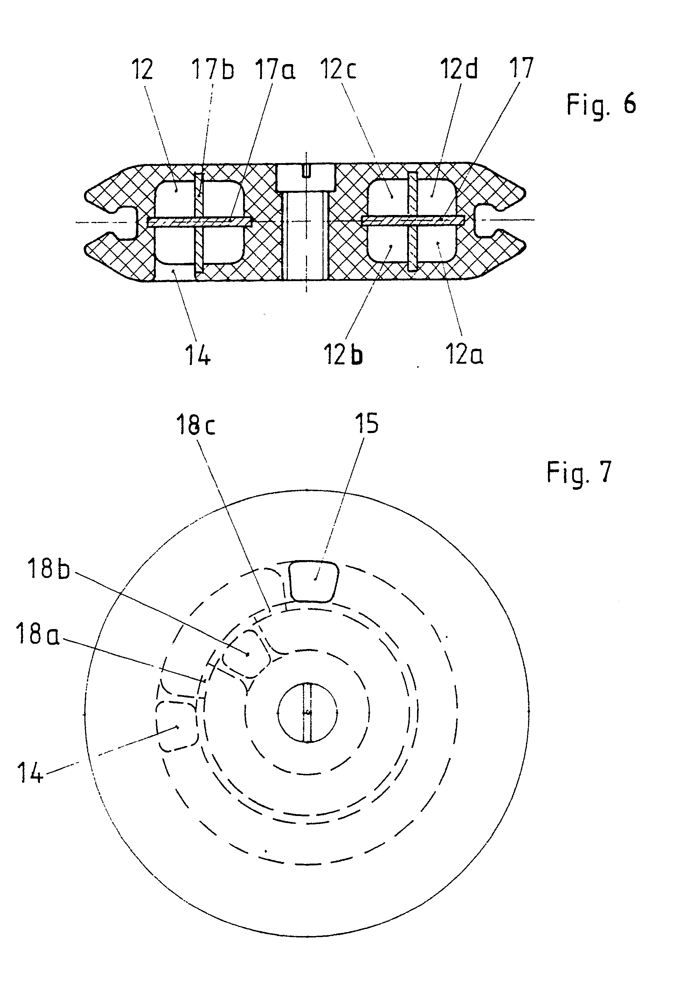

In den Ausführungsbeispielen der Figuren 6 und 7 ist ein Durchtrittskanal 12 über eine Scheibe 17a und einen Ring 17b in vier einzelne Kanalabschnitte 12a bis 12d unterteilt. Über eine Eintritts- bzw. Austrittsöffnung 14 gelangt das Dämpfungsmittel in den ersten Kanalabschnitt 12a, über eine Öffnung 18a in den zweiten Kanalabschnitt 12b. In der Scheibe 17a ist eine weitere Öffnung 18b eingebracht, so daß das Dämpfungsmittel vom zweiten Kanalabschnitt 12b in den dritten Kanalabschnitt 12c gelangen kann und von dort über eine Öffnung 18c in den vierten Kanalabschnitt 12d und somit zur Eintritts- bzw. Austrittsöffnung 15. Auch bei einer derartigen Ausführungsform kann die Länge des Durchtrittskanales 12 individuell eingestellt werden, wobei lediglich geometrisch einfache Bauteile Verwendung finden.

3

EP 0 278 054 B1

### Bezugszeichenliste

| | | |
|---|---|---|
| 1 | - | Stirnwand |
| 2 | - | Stirnwand (Deckplatte) |
| 3 | - | Gewindebohrung |
| 4 | - | Befestigungsstift |
| 5 | - | gummielastisches Federelement |
| 6 | - | Verbindungsflansch |
| 7 | - | Bördelung |
| 8 | - | Faltenbalg |
| 9 | - | Kammer (Druckkammer) |
| 10 | - | Kammer (Ausgleichsraum) |
| 11 | - | Entlüftungsöffnung |
| 12 | - | ringförmiger Durchtrittskanal |
| 13 | - | starres Bauteil |
| 14 | - | Ein- bzw. Austrittsöffnung |
| 15 | - | Ein- bzw. Austrittsöffnung |
| 16 | - | Membran |
| 17 | - | Trennelement |
| 18 | - | Öffnung |
| 19 | - | Nut |

### Ansprüche

1. Hydraulisch dämpfendes Gummilager, insbesondere Motorlager für Kraftfahrzeuge, mit zwei in Axialrichtung einander gegenüberliegenden starren Stirnwänden (1, 2) und wenigstens zwei axial hintereinander angeordneten, Dämpfungsflüssigkeit enthaltenden Kammern (9, 10), wobei die Kammern (9, 10) miteinander durch einen in einer im wesentlichen radialen Ebene ringförmig verlaufenden, in einem starren Bauteil (13) aufgenommenen Durchtrittskanal (12) verbunden sind und die Eintritts- und Austrittsöffnung (14, 15) in jeweils eine Kammer (9, 10) mündet, wobei im starren Bauteil (13) mindestens ein den Durchtrittskanal (12) in einzelne Kanalabschnitte (12a, 12b, 12c, 12d) teilendes Trennelement (17) angeordnet ist, wobei über mindestens eine Öffnung (18) im jeweiligen Trennelement (17) eine Verbindung der einzelnen Kanalabschnitte (12a, 12b, 12c, 12d) miteinander vorgesehen

4

EP 0 278 054 B1

ist,
dadurch gekennzeichnet,
daß das Trennelement (17) aus mindestens einem zylindrischen Ring (17b) besteht.

2. Gummilager nach Anspruch 1,
dadurch gekennzeichnet,
daß mindestens zwei Ringe (17b) koaxial nebeneinander angeordnet sind.

3. Gummilager nach Anspruch 1,
dadurch gekennzeichnet,
daß mindestens zwei Ringe (17b) derart mit zwei Scheiben (17a) verbunden sind, daß die Länge des Durchtrittskanales (12) verdreifacht wird.

4. Gummilager nach Anspruch 1,
dadurch gekennzeichnet,
daß das Trennelement (17) aus mindestens einer Scheibe (17a) und mindestens einem Ring (17b) zusammengesetzt ist.

5. Gummilager nach Anspruch 1,
dadurch gekennzeichnet,
daß das Trennelement (17) in einer Nut (19) des starren Bauteiles (13) drehbar gehalten ist.

**Claims**

1. Hydraulically damped rubber mounting, especially engine mounting for motor vehicles, with two rigid face walls (1,2) lying opposite one another in an axial direction and at least two chambers (9,10) containing damping fluid and arranged axially one behind the other, the chambers (9,10) being connected together through a flow passage (12) provided in a rigid component (13) and extending in a ring shape in a substantially radial plane and the inlet and outlet openings (14,15) leading into a respective chamber (9,10), at least one separating element (17) being arranged in the rigid component (13) and splitting the flow passage (12) into individual passage portions (12a,12b,12c,12d) and a connection of the individual passage portions (12a,12b,12c,12d) together being provided through at least one opening (18) in the respective separating element (17),
characterized in that,
the separating element (17) comprises at least one cylindrical ring (17b).

2. Rubber mounting according to claim 1,
characterized in that,
at least two rings (17b) are arranged co-axially adjacent one another.

3. Rubber mounting according to claim 1,
characterized in that,
at least two rings (17b) are connected to two discs (17a) in such a way that the length of the flow passage (12) is tripled.

4. Rubber mounting according to claim 1,
characterised in that,
the separating element (17) is made up of at least one disc (17a) and at least one ring (17b).

5. Rubber mounting according to claim 1,
characterized in that,
the separating element (17) is held rotatably in a groove (19) in the rigid component (13).

**Revendications**

1. Support en caoutchouc à amortissement hydraulique, en particulier support de suspension de moteur pour véhicules automobiles, possédant deux parois d'extrémité (1, 2) rigides situées l'une en face de l'autre en direction axiale et au moins deux chambres (9, 10) disposées axialement l'une derrière l'autre et contenant un liquide d'amortissement, dans lequel les chambres (9, 10) sont reliées entre elles par un canal de passage (12) prévu dans une pièce rigide (13), où ce canal s'étend en anneau dans un plan sensiblement radial et de manière que les ouvertures d'entrée et de sortie (14, 15) débouchent chacune dans une chambre (9, 10), et dans lequel au moins un élément de séparation (17) est disposé dans la pièce rigide (13) de manière à diviser le canal de passage (12) en portions de canal (12a, 12b, 12c, 12d), l'élément de séparation ou chaque élément de séparation (17) présentant au moins une ouverture (18) faisant communiquer les portions de canal (12a, 12b, 12c, 12d) entre elles, caractérisé en ce que l'élément de séparation (17) est constitué d'au moins une bague cylindrique (17b).

2. Support en caoutchouc selon la revendication 1, caractérisé en ce qu'au moins deux bagues (17b) sont juxtaposées axialement.

3. Support en caoutchouc selon la revendication 1, caractérisé en ce qu'au moins deux bagues (17b) sont reliées à deux disques (17a) de manière que la longueur du canal de passage (12) soit triplée.

4. Support en caoutchouc selon la revendication 1, caractérisé en ce que l'élément de séparation (17) est constitué d'au moins un disque (17a) et d'au moins une bague (17b).

5. Support en caoutchouc selon la revendication 1, caractérisé en ce que l'élément de séparation (17) est tenu rotatif en une gorge (19) de la pièce rigide (13).

Fig. 1

EP 0 278 054 B1

Fig. 2

12a  17  12b  13  17b

14                    19

15

Fig. 3

18

14

8

Fig. 4

13    17b    17b    12a    12b    12c

14    19

18b    15

Fig. 5

18a

14

Fig. 6

12   17b   17a   12c   12d   17

14   12 b   12a

18 c   15

Fig. 7

18 b

18 a

14